Europäisches Patentamt

European Patent Office

Office européen des brevets

(11) Veröffentlichungsnummer: **0 299 372**
**A2**

(12) **EUROPÄISCHE PATENTANMELDUNG**

(21) Anmeldenummer: 88110909.4

(51) Int. Cl.⁴: **G01N 27/30**

(22) Anmeldetag: 08.07.88

(30) Priorität: 16.07.87 DE 3723519

(43) Veröffentlichungstag der Anmeldung:
18.01.89 Patentblatt 89/03

(84) Benannte Vertragsstaaten:
AT BE CH DE ES FR GB GR IT LI LU NL SE

(71) Anmelder: **Conducta Gesellschaft für Mess- und Regeltechnik mbH & Co.**
**Dieselstrasse 24**
**D-7016 Gerlingen b. Stuttgart(DE)**

(72) Erfinder: **Rupprecht, Hans**
**Piusweg 31**
**D-4018 Langenfeld(DE)**

(74) Vertreter: **Otte, Peter, Dipl.-Ing.**
**Tiroler Strasse 15**
**D-7250 Leonberg(DE)**

(54) **Referenzsystem für die Analysen-Messtechnik.**

(57) Bei einem Referenzsystem mit einer einen Diffusionsübergang aufweisenden Bezugselektrode für die Analysenmeßtechnik wird vorgeschlagen, zwei konzentrisch zueinander angeordnete Glasröhrchen in Form eines Außenrohrs und eines Innenrohrs so auszubilden, daß zwischen beiden eine umlaufende Diffusionsblende als Diaphragma für das Referenzsystem gebildet ist. Dabei erweitert sich die innere Elektrode im unteren Bereich zunächst und verjüngt sich dann wieder, wobei die äußere Elektrode sich dieser Verjüngung anschmiegt und so zwischen beiden Flächen die umlaufende Diffusionsblende gebildet wird. Als Feuchtigkeitsvermittler kann auf das innere Membranträgerrohr im Bereich der Diffusionsblende ein Kapillarsystem aufgebracht, beispielsweise durch Aufsintern eines Keramikmaterials gebildet werden. Die beiden Glasröhrchen sind nur im oberen Bereich miteinander fest, beispielsweise durch Verschmelzen, verbunden. In den Zwischenraum zwischen beiden Glasröhrchen erstreckt sich an einer Stelle eine lange Ableitpatrone mit tiefsitzender Halbzelle, isolierter Ableitung und eigenem Diaphragma im Übergang zum von einem Gel gebildeten Brückenelektrolyten.

## Referenzsystem für die Analysen-Meßtechnik

Stand der Technik

Die Erfindung geht aus von einem Referenzsystem nach dem Oberbegriff des Anspruchs 1.

Referenzsysteme, also Bezugselektroden, die ein konstantes Referenzpotential, insbesondere für die pH- und Redoxmessung zur Verfügung stellen, sind bekannt (DE-OS 32 03 406, DE-OS 32 03 407, DE-OS 34 11 800), auch in Form der sogenannten Elektrolyt-Brücken-Systeme mit zwei hintereinandergeschalteten Diaphragmen oder als zur pH-Messung geeignete Einstabmeßkette (pH-Kombi-Elektrode), bei der die pH-sensitive Elektrode und die Referenzelektrode in einem Glasröhrchen gemeinsam untergebracht sind.

Auf eine spezielle Ausführungsform einer solchen Bauart ist auch die folgende Erfindung gerichtet.

Bei bekannten Bezugselektroden sind Diffusionsübergänge in vielfältiger Form bekannt, beispielsweise als Keramikdiaphragma, Platindiaphragma, Teflondiaphragma, aber auch als in die Glasröhrchenseitenwand eingebrachte, selbstverständlich sehr kleine Lochöffnungen, wobei der in diesem Glasröhrchen enthaltene Elektrolyt dann ein Gel geeigneter Konsistenz ist und beispielsweise aus Agar-Agar, aus Polyacrylmaterial oder PVP besteht. Ein solches Gel wirkt als Molekularsieb, in welches üblicherweise KCl-Ionen eingelagert sind.

Üblicherweise beinhalten Bezugselektroden eine Halbzelle aus Silber/Silberchlorid, die in eine Lösung konstanter Chlorid-Ionen-Konzentration eintaucht. Diese Lösung ist, dann gegebenenfalls gelfixiert, über das verwendete Diaphragma mit dem Meßmedium verbunden. Allgemein problematisch bei solchen Bezugssystemen ist, daß diese wegen der nicht auszuschließenden Möglichkeit einer Kontamination von außen nicht potentialkonstant sind. Dabei kann durch das Diaphragma eine Diffusion in beiden Richtungen erfolgen, veranlaßt durch Konzentrationsunterschiede zwischen dem Bezugselektrolyt und dem Meßmedium, wobei bei einem Eindringen des Meßmediums in das Innere der Bezugselektrode die Gefahr der Verstopfung des Diaphragmas durch Kristallisation oder dessen Zusetzen mit sonstigen Medien besteht und hierbei auch der Bezugselektrolyt und das Ableitsystem vergiftet werden kann.

In der Gegenrichtung kann sich ein Verlust an Bezugselektrolyt oder durch sogenannte Auswaschungen Konzentrationsänderungen des Elektrolyten ergeben. In diesem Zusammenhang und in Ergänzung des allgemeinen Diffusionsbegriffes ist es auch wegen der notwendigen hydraulischen Durchlässigkeit des oder der vorhandenen Diaphragmen oder Löcher bekannt, eine hydraulische Bewegung der Medien durch das Diaphragma zu berücksichtigen, veranlaßt durch Druckdifferenzen, die sich aufgrund eines Über- oder Unterdrucksmeßmediums, verglichen zum Druck des Bezugselektrolyten ergeben, oder auch nur auf Temperaturveränderungen zurückzuführen sind, die zu erheblichen Änderungen im Druckgleichgewicht führen können.

Es ist üblich, Druckdifferenzen dadurch zu begegnen, daß man dem Bezugssystem von außen einen Druck zuführt oder dieses unter einen solchen Druck setzt, daß dieser mindestens gleich, gegebenenfalls geringfügig größer als der Mediumsdruck ist, wodurch ein hydraulisches Eindringen zwar vermieden wird, andererseits aber die Gefahr besteht, daß bei einem Wegbleiben des äußeren Mediumsdrucks Beschädigungen der Bezugselektrode aufgrund des dann überstarken inneren Drucks nicht ausgeschlossen sind.

Es ist auch bekannt, die Bezugselektrode nach außen hermetisch abzuschließen und ihren Innenraum vollständig zu füllen, so daß äußere Druckänderungen des Meßmediums nicht zu einer hydraulischen Bewegung durch das Diaphragma führen können. Hier können sich aber Probleme der notwendigen, hochgenauen Füllung ergeben, die unter Umständen Luftbläschen einschließt, so daß kein hinreichender Gegendruck im Bezugssystem gegen einen sich ändernden äußeren Mediumsdruck aufgebaut werden kann - eine hydraulische Bewegung durch das Diaphragma kann aber auch bei hermetischem Abschluß schon allein durch Temperaturveränderungen auftreten, was beispielsweise dazu führt, daß bei wiederholten stärkeren Temperaturdifferenzen einen Art Atmung des eingeschlossenen Volumens entsteht, wodurch wieder hydraulische Wanderungen durch das Diaphragma in beiden Richtungen auch bei hermetischem Abschluß auftreten.

Besonders problematisch ist beispielsweise bei dem durch ein Loch in der Seitenwand der Glaselektrode des Bezugssystems gebildeten Diffusionsübergang, daß sich sehr häufig im Inneren des Glasröhrchens und unmittelbar angrenzend zum Loch und dieses umgebend ein kleines Luftbläschen bilden kann, beispielsweise schon dadurch, daß man die Bezugselektrode aus einem wärmeren Meßmilieu herausnimmt, also an die Atmosphäre bringt und kürzere Zeit liegen läßt, wodurch sich dieses und in dem Glasröhrchen der Bezugselektrode enthaltene Elektrolyt abkühlt und dann Luft ansaugt.

Ein solches Bezugssystem ist dann nicht mehr zu gebrauchen, da sich durch das Luftbläschen eine völlige Isolierung ergibt. Es ist auch kompliziert und aufwendig, das kleine Loch in die Glasröhrchenseitenwand einzubringen, wobei sich ferner noch bei einem entstehenden Innendruck das Problem ergibt, daß eine Umlenkung der Schubkraft des sich ausdehnenden Elektrolyten um beispielsweise 90° aufgefangen werden muß, damit überschüssiges Gel herausgepreßt werden kann; die mechanische Krafteinwirkung auf die Innenfläche des Elektrodenschaftes ist daher bei Lochdiaphragmen erheblich und kann zum Bruch führen.

Übliche Keramikdiaphragmen haben stets den Nachteil, daß sich über dem Diaphragma ein sogenanntes Diaphragmen-Diffusionspotential ausbildet bzw. ausbilden kann, was zu Meßwertverfälschungen führt. Schließlich kann sich bei einem Loch-, Keramik- oder Platindiaphragma in Verbindung mit einer Einstabmeßkette noch das Problem ergeben, daß die sich beim Eintauchen in das Meßmedium bildende lonenwolke gerichtet ist, nämlich auf einer Seite austritt und bei einem strömenden Meßmedium gerade von der sensitiven Glasmembran der pH-Elektrode weggerichtet sein kann, so daß sich bei der Messung auch hier mindestens Fehlerpotentiale ergeben, es sei denn, man achtet stets darauf, daß die Richtung der Lochöffnung auf die Strömung des Meßmediums abgestimmt ist.

Das Entstehen einer solchen gerichteten und daher nachteiligen lonenwolke kann durch bekannte Elektroden mit Schliffdiaphragma gemindertwerden, bei denen eine oder mehrere kleine Lochöffnungen in einem konischen Glasschliff-Seitenteil des Elektrodenröhrchens angeordnet sind, wobei eine entsprechend geschliffene konische Glocke auf diesem Elektrodenbereich aufsitzt und so zwar für symmetrische Bedingungen sorgt, andererseits aber den Nachteil hat, daß, insbesondere durch Kavitations-, aber auch durch entsprechende Temperaturänderungen, die Glocke sich immer stärker auf den Glaskonus aufsetzt, bis die Kapillarwirkung unterbrochen ist.

Der Erfindung liegt daher die Aufgabe zugrunde, ein Referenzsystem mit einer Bezugselektrode zu schaffen, bei dem die auf das Diaphragma zurückgehenden Probleme behoben sind, also insbesondere keine Blockade oder Kontamination des Diaphragmas auftritt, bei gleichzeitiger Richtungsunabhängigkeit (Bildung einer konzentri schen Elektrolytwolke) und gleichzeitiger thermischer Unempfindlichkeit des gesamten Systems.

Vorteile der Erfindung

Das erfindungsgemäße Referenzsystem löst diese Aufgabe mit den kennzeichnenden Merkmalen des Hauptanspruchs und hat neben der wesentlich günstigeren Fertigung gegenüber üblichen, ebenfalls mit einem Elektrolyt-Gel gefüllten Elektroden die folgenden Vorteile:

1. Die radial umlaufende Diffusionsblende im Übergang zwischen Innen- und Außenrohr der Elektrode, die insofern kein Diaphragma ist (daher auch kein Diaphragment-Diffusionspotential) ergibt in axialer Richtung eine Diffusionsfläche, die praktisch blockadesicher ist, so daß Störungen aufgrund eines Zusetzens im "Diaphragma"-Bereich entfallen; keine Verblockung oder Kontamination, daher kein Meßfehler.

2. Durch die umlaufende Diffusionsblende bildet sich um die pH-sensitive Membran ein zentrosymmetrische Kontaktzone erhöhter lonenaktivität; mit anderen Worten, die pH-Membran ist von einer konzentrischen Elektrolytwolke umschlossen, so daß sich auch in ionenarmen Meßlösungen (ionenarmem Wasser) eine große Betriebssicherheit ergibt und bei fließender Meßlösung nicht darauf geachtet werden muß, wo sich das Diaphragma befindet. Die Erfindung besitzt daher die bekannten Vorteile einer pH-Kombielektrode mit Schliffdiaphragma, weist jedoch nicht deren Nachteile auf, die im industriellen Einsatz hauptsächlich darin zu sehen sind, daß sich die konische Schliffhülse auf dem Konus der Elektrode festsetzt, verursacht durch Kavitation und thermische Belastung und Verstopfungen durch Verkrustungen auftreten.

3. Durch die Möglichkeit einer kompletten Vorfertigung der inneren pH-Elektrode als verschlossenes Membran-Träger(glas)rohr, gefüllt mit Innenpuffer und mit Ag/AgCl-Ableitung versehen, ist ein stufenweiser Aufbau des Außenrohrs, wie bisher erforderlich, nicht mehr nötig - der Schaft ist durchgängig. Das bedeutet durch die fehlende Glaseinschmelzung eine Vermeidung nachträglicher Bruchgefahr durch im Glas entstehende Spannungen.

4. Durch die beiden nur auf einer Seite fest miteinander verbundenen Innen- und Außenrohre, nämlich im Befestigungsbereich des weiterführenden, außerhalb der Meßlösung befindlichen Sockels, wo die beiden Glasrohre beispielsweise miteinander verschmolzen sein können, treten bei thermischer Belastung durch die unterschiedliche Ausdehnung keine Verspannungen von Innen- zu Außenrohr auf, die sich aufgrund eines möglichen Temperaturgradienten Innenrohr/Außenrohr ergeben könnten. Dies bedeutet eine wesentlich größere mechanische Festigkeit gegenüber bisher bekannten Kombielektrodensystemen.

5. Da das bisher bei Einstabmeßketten übliche Diaphragma völlig entfällt, kann auch kein Diaphragmen-Diffusionspotential entstehen, so daß sich eine bessere Meßgenauigkeit und Fehlersicherheit ergibt. Ein Keramikmaterial als Diaphragma versucht durch seine chemisch/ physikalischen Eigenschaften, sich Anlagerungen beliebiger Art sozusagen von selbst zu schaffen.

6. Gegenüber dem bekannten Lochdiaphragma ergibt sich bei vorliegender Erfindung bei Einwirken einer thermischen Last keine Umlenkung der Schubkraft des sich ausdehnenden Elektrolyten um die erforderlichen 90°, damit überschüssiges Gel durch das Lochdiaphragma herausgepreßt werden kann, sondern die Schubbewegung verläuft koaxial durch die umlaufende Diffusionsblende, also ausschließlich axial in Elektrodenrichtung gesehen. Hierdurch ergibt sich eine geringere mechanische Krafteinwirkung im gegebenen Fall auf die Innenfläche des Elektrodenschaftes.

7. Ferner ist es ausgeschlossen, daß bei thermischer Belastung und entsprechenden Abkühlphasen an der Luft punktuelle Lufteinschlüsse, wie dies beim Lochdiaphragma nicht zu vermeiden ist, zu einer Isolation des Referenzsystems führen können; die Erfindung sichert daher eine wesentlich größere Betriebs- und Kalibriersicherheit.

8. Durch die umlaufende offene Diffusionsblende zwischen Innen- und Außenrohr ergibt sich ein offenes Diaphragma, so daß durch Kontamination keine Meßfehler auftreten können. Auch hierdurch wird die Betriebssicherheit erhöht.

9. Da es keine Elektrolyteinfüllöffnungen gibt, ist somit der Glasschaft geschlossen und kann daher durch die Verwendung nicht kompressibler Elektrolytfüllungen bis zu Drücken von 12 Bar eingesetzt wer den; eine druckbeaufschlagte KCl-Vorlage ist nicht erforderlich, die Elektrode ist somit wartungsärmer.

Durch die in den Unteransprüchen aufgeführten Maßnahmen sind weitere vorteilhafte Ausgestaltungen und Verbesserungen des im Anspruch 1 angegebenen Referenzsystems möglich. So ist es möglich, durch Aufbringen eines Kapillarsystems (beispielsweise Aufsintern eines Keramikmaterials) auf dem inneren Membranträgerrohr (pH-Elektrode) einen Feuchtigkeitsvermittler zu bilden, so daß die Phasengrenze polymeres Gel (als Elektrolytfüllung zwischen Außen- und Innenrohr - Brückenelektrolyt)/Meßlösung nicht abreißen kann. Selbst nach einem Austrocknen des Gels wird Feuchtigkeit über den Feuchtigkeitsvermittler ins Gel transportiert und läßt dieses wieder aufquellen. Auch dies trägt entscheidend zu einer Erhöhung der Betriebssicherheit bei, wobei darauf hingewiesen wird, daß dieses auf dem Innenrohr aufgebrachte Kapillarsystem, was auch, wie erwähnt, ein Keramikmaterial sein kann, kein übliches Keramikdiaphragma darstellt, da hierdurch die umlaufende, radiale Diffusionsblende zwischen Innen- und Außenrohr nicht beeinflußt wird.

Ferner ist vorteilhaft, daß durch eine lange Ableitpatrone mit tiefsitzender Ag/AgCl-Halbzelle und isolierter Ableitung eine langzeitstabile Halbzellenspannung sichergestellt ist, da die örtlich klar definierte Halbzelle nur über eine lange Elektrolytbrücke mit dem Meßmedium verbunden ist.

Zeichnung

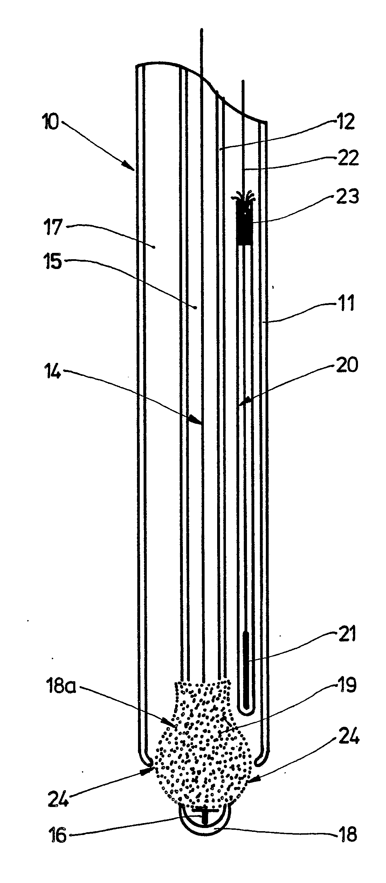

Ein Ausführungsbeispiel der Erfindung ist in der Zeichnung dargestellt und wird in der nachfolgenden Beschreibung näher erläutert. Die Zeichnung zeigt in einer Seitenansicht das erfindungsgemäße Referenzsystem mit Bezugselektrode in Verbindung mit einer Einstabmeßkette (Kombielektrode).

Beschreibung der Ausführungsbeispiele

Der Grundgedanke vorliegender Erfindung besteht darin, das Referenzsystem in Form zweier konzentrisch zueinander angeordneter Glasröhrchen, nämlich einem Innenrohr und einem Außenrohr aufzubauen und diese Glasröhrchen nur oben, wo also beispielsweise eine Sockelbefestigung erfolgt, miteinander fest zu verbinden, im unteren Bereich jedoch, wo die so gebildete Einstabmeßkette (Kombielektrode) in die Meßlösung eintaucht, durch spezielle geometrische Strukturen eine umlaufende Diffusionsblende als Übergang zu bilden, wobei dann noch in Ausgestaltung die Referenz-Halbzelle in einer eigenen Trägerableitpatrone angeordnet ist, mit isolierter Ableitung und entsprechend tiefsitzend, so daß sich eine erhebliche Diffusionslänge von unten nach oben zunächst (über den äußeren bzw. Brückenelektrolyt) ergibt und dann wieder nach unten durch die Elektrolytfüllung der Ableitpatrone, die oben, also im Übergang zum Brückenelektrolyten (Hauptgel) durch ein eigenes Diaphragma abgeschirmt oder abgeschlossen ist, welches bevorzugt aus Siliziumdioxidfasern bestehen kann.

In der Zeichnung ist die Einstabmeßkette mit 10, das Außen(glas)rohr mit 11 und das Innen(glas)rohr mit 12 bezeichnet. Innen- und Außenrohr sind in der Zeichenebene oben miteinander fest verbunden (nicht dargestellt), beispielsweise durch das Aufsetzen, Befestigen, gleichzeitigem Einkitten oder Einkleben in einen Anschlußsockel oder durch Verschmelzen im oberen Übergang miteinander, jedenfalls erst, nachdem die innere pH-Elektrode 14, die vom Innenrohr 12 gebildet ist, komplett vorgefertigt und verschlossen ist. Das Membranträgerrohr als Innenrohr 12 der pH-Elektrode 14 ist ein klassisches Glaselektrodeninnenteil mit hier H-ionensensitiver Membran 18 und ist mit einem entsprechenden Elektrolyt-Innenpuffer 15 gefüllt und stellt mit seiner Ag/AgCl-Ableitung 16 ein eigenes System dar. Zwischen dem Innenrohr 12 der pH-Elektrode 14 und dem Außenrohr 11, welches insofern gleichzeitig den Behälter für das Innenrohr und den Gel-Elektrolyten des Referenzsystems, also der Bezugselektrode bildet, befindet sich der gelfixierte Elektrolyt (z. B. silberfreies Polytexgel) als Hauptfüllung, der bei diesem dargestellten Ausführungsbeispiel gleichzeitig Brückenelektrolyt ist und mit 17 bezeichnet ist.

Der erforderliche Diffusionsübergang der Bezugselektrode zum Meßmedium ist gebildet durch eine umlaufende Diffusionsblende zwischen Innenrohr und Außenrohr etwa dort, wo die Membran 18 des Innenrohrs der pH-Elektrode über das Außenrohr hinausragt. Dabei ist dieser Übergang in spezieller Weise strukturiert.

Vor Erreichen des Übergangs in Richtung nach unten in der Zeichenebene, also noch umgeben von dem Außenrohr 11 beginnt das Innenrohr sich rotationssymmetrisch auszubauchen und nimmt insgesamt eine Art ovale, gegebenenfalls auch kugelige Form an, wie bei 18a gezeigt.

Dies führt allmählich zu einer Annäherung an die Innenwandung des zunächst noch geradlinig, also zylindrisch verlaufenden Außenrohres, welches dann vorzugsweise ebenfalls nach innen einzieht, also sich beispielsweise dem größten Durchmesser oder an den wieder verjüngenden, kleineren Umfang des Innenrohrs annähert.

Man kann auch sagen, daß dort, wo die Ausbauchung des Innenrohrs wieder zurückgeht - weiter nach unten geht dann das Innenrohr von einem engeren Umfang in die etwa kugelförmige Form der Membran 18 über -, das Außenrohr dieser Zurücknahme der Ausbeulung folgt, also ebenfalls einzieht und, gegebenenfalls auch über eine vorgegebene Höhe der sich im Durchmesser allmählich wieder verringernden, sich zurückziehenden Ausbauchung des Innenrohrs folgen kann, jedenfalls so, daß mit kleinem oder kleinstem gegenseitigem Abstand eine umlaufende Diffusionsblende 24 oder Öffnung, also eine spezielle Art eines radialen Diaphragmas gebildet ist. Das Außenrohr endet dann, nachdem es sich entsprechend verjüngt hat, und gibt die Weiterführung des Innenrohrs frei, welches dann in die pH-sensitive, tropfenförmige oder kugelförmige Membran am Ende des Innenrohrs mündet.

Man erkennt, daß die beiden Glasröhrchen 11 und 12 sozusagen ineinander stecken, unten im soeben geschilderten Übergang aber nicht miteinander verbunden sind, so daß sich Spannungen in den Glasröhrchen nicht aufbauen können, denn im Endeffekt sitzt das Innenrohr auch dort, wo der Endbereich des Außenrohrs die Ausbeulung nach innen einziehend umfaßt, "lose" im Außenrohr. Miteinander befestigt, also etwa verschmolzen, sind die beiden Röhrchen 11 und 12 am oberen Endbereich. Hierdurch ergibt sich in axialer Richtung eine vergleichsweise "große" Diffusionsfläche für die Diaphragmabildung, wobei in einer bevorzugten Ausgestaltung auf das Innenrohr in diesem Übergangsbereich und beispielsweise die Ausbeulung von oben bis unten und über das Außenrohr hinausreichend noch überdeckend, eine poröse Kontaktbeschichtung oder ein Kapillarsystem 19 aufgetragen, beispielsweise aufgesintert sein kann. Dieses Kapillarsystem kann ein geeignetes Keramikmaterial sein und sorgt als Feuchtigkeitsvermittler u.a. dafür, daß die Phasengrenze polymeres Gel 17/Meßlösung nicht abreißen kann und daß auch bei einem eventuellen Austrocknen des Gels zwischen Innen- und Außenrohr wieder Feuchtigkeit in das Gel transportiert wird und dieses aufquellen kann.

Eine bevorzugte weitere Ausgestaltung vorliegender Erfindung besteht darin, daß das Referenzsystem im Zwischenraum zwischen Innenröhrchen 12 und Außenröhrchen 11 mit eigener langer Ableitpatrone 20 mit unten, also am unteren Ende der Ableitpatrone tiefsitzender Ag/AgCl-Halbzelle 21 gebildet ist und in der Ableitpatrone (schmales Glasröhrchen) ein eigener (zusätzlicher) Ableit-Halbzellenelektrolyt (flüssiges KCl) geeigneter Zusammensetzung sitzt. Die durch den Elektrolyt in der Ableitpatrone 20 führende Ableitung ist durch einen geeigneten Überzug isoliert, beispielsweise Lack oder Plastiküberzug, so daß nur an der Oberseite der Patrone bei 22 ein Platindraht herauskommt, der aber nicht potentialbestimmend ist und nicht in Lösung geht. Der Silberdraht der Ag/AgCl-Halbzelle ist gegen die Innenelektrolyten im Glasröhrchen 20 (Ableitpatrone) isoliert.

Die Ableitpatrone ist im Übergang zum äußeren gelfixierten Hauptelektrolyten (der jetzt Brückenelektrolyt ist) mittels eines weiteren Diaphragmas 23 verschlossen, welches vorzugsweise aus Siliziumdioxidfasern besteht. Hierdurch, nämlich durch die Abschirmung des separaten, innenliegenden Referenzelektrodensystems vom Hauptgel durch ein eigenes Diaphragma 23 entsteht ein Brückenelektrolytsystem. Dadurch gelingt die Aufrechterhaltung einer langzeitstabilen Halbzellenspannung.

Die Elektroden können mit entsprechend hohem Druck gefüllt werden, so daß aufgrund der nichtkompressiblen Medien ein Einsatz auch ohne Druckausgleich möglich ist.

Alle in der Beschreibung, den nachfolgenden Ansprüchen und der Zeichnung dargestellten Merkmale können sowohl einzeln als auch in beliebiger Kombination miteinander erfindungswesentlich sein.

## Ansprüche

1. Referenzsystem mit einer einen Diffusionsübergang aufweisenden Bezugselektrode für die Analysenmeßtechnik, insbesondere zur Messung von Ionenkonzentrationen und -aktivitäten in einem Meßmedium (Meß- oder Prozeßlösung) in Verbindung mit beispielsweise einer pH-Meßelektrode in Form einer Einstabmeßkette, zur Erzeugung konstanter Bezugspotentiale in der Potentiometrie u. dgl., dadurch gekennzeichnet, daß zwei konzentrisch zueinander angeordnete Glasröhrchen (Außenrohr 11 und Innenrohr 12) gebildet sind und daß
das innere Glasröhrchen um einen vorgegebenen Abstand aus dem äußeren, es umgebenden Glasröhrchen (11) im Bereich der Meßlösung herausragt, und daß im eng angrenzenden Übergang zwischen beiden Glasröhrchen (11, 12) eine umlaufende Diffusionsblende (24) gebildet ist.

2. Referenzsystem nach Anspruch 1, dadurch gekennzeichnet, daß das Innenröhrchen unterhalb der Diffusionsblende zugeschmolzen (verschlossen) ist (Einzelreferenzelektrode).

3. Referenzsystem nach Anspruch 1, dadurch gekennzeichnet, daß das innere Glasröhrchen mit einer sensitiven Membran verschlossen ist und so die Meßelektrode mit über der Diffusionsblende (24) heraustehender Membran (18) bildet (Einstabmeßkette).

4. Referenzsystem nach einem der Ansprüche 1-3, dadurch gekennzeichnet, daß im Übergangsbereich zur umlaufenden Diffusionsblende (24) das innere Röhrchen eine allmählich ansteigende Querschnittsvergrößerung (Ausbauchung) aufweist, die nach unten wieder geringer wird,und daß im Bereich maximaler Ausbauchung des Innenröhrchens die Ringwandung des äußeren Röhrchens (11) nach innen einzieht und dann endet.

5. Referenzsystem nach Anspruch 1, dadurch gekennzeichnet, daß die Ausbauchung des inneren Röhrchens (12) noch vor dem Ende des äußeren Röhrchens (11) wieder abnimmt und in diesem Bereich geringer werdender Querschnittsfläche des Innenröhrchens die Ringwandung des äußeren Röhrchens nach innen auf das innere Röhrchen gerichtet einzieht und dann unter Bildung des Diffusionsblendenabstands endet.

6. Referenzsystem nach einem der Ansprüche 1-5, dadurch gekennzeichnet, daß die umlaufende Diffusionsblende (24) durch einen bemessenen Abstand zwischen der ausbauchenden und wieder einbauchenden rotationssymmetrischen Struktur des Innenröhrchens (12) und der rotationssymmetrischen, sich nach innen verjüngenden und der Einbauchung im wesentlichen folgenden Innenwandung des Außenröhrchens (11) definiert ist.

7. Referenzsystem nach einem der Ansprüche 1-6, dadurch gekennzeichnet, daß das über die Einbauchung und den Abschluß der Außenrohrwandung weitergeführte innere Röhrchen in die kugel- oder tropfenförmig ausgebildete pH-sensitive Membran (18) mündet derart, daß diese zentrosymmetrisch in einer Zone erhöhter Ionenaktivität mit Bezug auf die umlaufende Diffusionsblende (24) angeordnet ist.

8. Referenzsystem nach einem der Ansprüche 1-7, dadurch gekennzeichnet, daß der Raum zwischen Innen- und Außenröhrchen von einem Gelelektrolyten (17) ausgefüllt ist, der mit Bezug auf das sich ebenfalls im Zwischenraum zwischen Innen- und Außenröhrchen (11, 12) befindende patronenförmige Referenz-Ableitsystem ein Brückenelektrolyt ist.

9. Referenzsystem nach einem der Ansprüche 1-8, dadurch gekennzeichnet, daß das innere, die pH-sensitive Elektrode bildende Glasröhrchen im Aus- und Einbauchungsbereich und über die umlaufende Diffusionsblende (24) nach unten weitergeführt von einem Kapillarsystem beschichtet ist.

10. Referenzsystem nach Anspruch 9, dadurch gekennzeichnet, daß das Kapillarsystem ein auf die Außenfläche des Innenröhrchens aufgesintertes Keramikmaterial (poröse Kontaktbeschichtung) ist.

11. Referenzsystem nach Anspruch 9, dadurch gekennzeichnet, daß das Kapillarsystem ein auf die Außenfläche des Innenröhrchens aufgesintertes Kunststoffmaterial ist.

12. Referenzsystem nach einem der Ansprüche 1-11, dadurch gekennzeichnet, dßa die lange Ableitpatrone (25) im Zwischenraum zwischen innerem und äußerem Glasröhrchen (11, 12) nach innen bis etwa zum Ausbauchungsbereich des inneren Röhrchens geführt ist mit tiefsitzender Halbzelle (Ag/AgCl) und isoliert in einem eigenen Elektrolyt geführter Ableitung (Silberdraht).

13. Referenzsystem nach Anspruch 12, dadurch gekennzeichnet, daß die isolierte Ableitung der Referenz-Halbzelle am Ende der von einem Glasröhrchen gebildeten Ableitpatrone in einen nicht in Lösung gehenden, isolierten Platinendraht übergeht und das Glasröhrchen der Ableitpatrone von einem eigenen Diaphragma (Faseridaphragma) abgeschlossen ist.

14. Referenzsystem nach Anspruch 13, dadurch gekennzeichnet, daß das Faserdiaphragma aus einem Bündel von Siliziumdioxidfasern gebildet ist.

15. Referenzsystem nach einem oder mehreren der Ansprüche 1-14, dadurch gekennzeichnet, daß unter Verzicht auf Elektrolyt-Einfüllöffnungen das Innenröhrchen (12) der pH-Elektrode und/oder das Glasröhrchen der Referenzableitpatrone durch eine nichtkompressible Elektrolytfüllung befüllt sind.

16. Referenzsystem nach einem der Ansprüche 1-15, dadurch gekennzeichnet, daß das innere Elektrodensystem (pH-sensitive Elektrode) von einem komplett durch Vorfertigung gewonnenen verschlossenen Membranträgerrohr gebildet ist, das mit seinem Innenpuffer-Elektrolyt befüllt und mit einer (Ag/AgCl)-Ableitung versehen ist.

17. Referenzsystem nach einem der Ansprüche 1-16, dadurch gekennzeichnet, daß die beiden Glasröhrchen an ihren zur umlaufenden Diffusionsblende (24) abgewandten Endbereichen miteinander fest durch Verschmelzen verbunden sind.

18. Referenzsystem nach einem der Ansprüche 1-16, dadurch gekennzeichnet, daß die beiden Glasröhrchen an ihren zur umlaufenden Diffusionsblende (24) abgewandten Endbereichen durch Verschmelzen oder geeignete Zemente oder Kleber fest miteinander verbunden sind.